# EUROPEAN PATENT APPLICATION

(11) **EP 3 038 037 A1**
(43) Date of publication of application: **29.06.2016**
(21) Application number: 14307157.9
(22) Date of filing: 23.12.2014
(51) Int. Cl.: G06Q 20/32, H04L 9/08, G06Q 30/00

(54) **Methods to secure RFID transponder data**

(71) Applicant: Orange, 75015 Paris (FR)
(72) Inventor: Zemek, Radim, Tokyo, Tokyo 160-0022 (JP)
(74) Representative: Orian, Yvette Suzanne

(57) **Abstract**

The confidentiality of data in an RFID transponder tagging an item is protected at the point of acquisition of the item by a user, by reading the RFID transponder data, determining a public key of a cryptographic public-private key pair of the user, encrypting at least some of the RFID transponder data using the user's public key, and writing the encrypted RFID transponder data in the RFID transponder. This data-securing method enables the information embodied in the RFID transponder-data to be kept confidential after the user has acquired the tagged item but still to be capable of retrieval in an environment such as a smart home in which smart devices equipped with an RFID reader have access to the user's private key.

## Description

The present invention relates to techniques for securing RFID transponder data and, in particular, to the protection of the confidentiality of data held in an RFID transponder when a user acquires or updates the RFID transponder.

Radio frequency identification devices (commonly called RFID transponders or RFID tags) have become ubiquitous and are often attached to products to enable enterprises to perform, inter alia, automated supply chain management operations.

A typical RFID transponder comprises an antenna for communication with an RFID reader, and an integrated circuit storing data such as an identification code that uniquely identifies the item to which the transponder is attached. The identification code may enable an RFID reader to obtain information about the item that is tagged using this transponder, for example, via use of a data look-up service (e.g. the Object Naming Service provided by EPC Global Inc.) and/or it may itself contain information about the tagged item.

For example, it is common for RFID transponder data to include an EPC (Electronic Product Code) having a data structure as defined in the EPC Global Tag Data Standard. The EPC Global Tag Data Standard defines a 96-bit EPC having an 8-bit header (indicating the EPC version number), a subsequent 28-bit data field for "EPC Manager" which generally is used to designate the company or manufacturer of the tagged item, next a 24-bit "Object Class" data field which refers to the type of the product/item (e.g. "this is a 1 kg bag of premium-grade basmati rice"), and finally a 36-bit Serial Number (which identifies this specific instance of the type of object identified by the Object Class field). A considerable quantity of information regarding the item tagged by the RFID transponder can be obtained simply from its EPC, and additional information (for example regarding the movement of this individual object through a supply chain) can be obtained using data look-up services.

RFID transponders may be categorized with respect to different criteria. If consideration is given to the transponder's power source, RFID transponders may be classified as "passive" (no internal power source, power is obtained from the interrogation signal received from an RFID reader device), "semi-passive" or "battery-assisted passive" (power for communications is derived from the interrogation signal for an RFID reader but an on-board battery supplies power for the on-board IC), or "active" (an on-board battery supplies power both for communications and for the on-board IC). The present invention may be applied to RFID transponders of all of the afore-mentioned types.

RFID transponders can take different physical forms depending on the application. A typical RFID transponder applied to a product in a shop may be in the form of a tag consisting of an integrated circuit and an antenna embedded in a substrate made of plastics materials or Mylar^{®}. An RFID transponder used for "micro-chipping" a domestic pet may be in the form of a capsule made of glass or plastics material that is injected under the animal's skin and contains an integrated circuit and antenna. Similar products exist for use as sub-dermal implants in human beings (e.g. to enable contactless identification or payment in a nightclub). The present invention is not particularly limited having regard to the physical form of the RFID transponder whose data is to be secured and may be applied in relation to RFID transponders that tag objects or living things (including human beings)..

The way in which an RFD transponder is physically associated with the item that it identifies may vary. Often the RFID transponder is affixed to the item or its packaging, for example using an adhesive, but there are other possibilities. References in this text to an item being "tagged" by an RFID transponder (and analogous uses of the verb "to tag") indicate that the transponder is associated with a specific item, without limitation having regard to whether the tag is physically attached to the item, adhered to or included in its packaging, implanted into the item, or associated in some other manner. Indeed, the invention is not particularly limited having regard to the form of the association between the RFID transponder and the item it tags.

If consideration is given to the frequency of the communications signal passing between the RFID transponder and an RFID reader device, transponders may be classified as low-frequency, high-frequency (HF) or ultra-high frequency (UHF). The communications range increases in the order LF < HF < UHF.

By their very nature RFID transponders are readable in a non-contact manner by compatible RFID reader devices that are within range. This raises privacy problems especially (but not exclusively) in relation to UHF transponders, because unauthorized people may seek to access the data in the RFID transponder. Thus, for example, a third party may be able to operate an RFID reader in a clandestine manner to read RFID transponder data from RFID-tagged products that a user is carrying away from a store where he has bought the products. The third party could then, for example, detect if the user has purchased any high-value items, with a view to stealing from the user. As another example, clandestine reading of RFID transponder-data from RFID-tagged books that a user is carrying home from a library could enable a third party to determine the user's interests and opinions, thereby invading the user's privacy. As yet another example, if a third party knows that a user has bought an RFID-tagged product of a particular type, the third party could seek to track the product, based on its RFID transponder data, as a way of tracking the movements of the user. Clandestine tracking is of particular concern in the case where the RFID transponder is a sub-dermal implant.

Various approaches have been proposed for protecting confidentiality of RFID transponder data of RFID-tagged objects acquired by users.

One simple approach consists in removing RFID tags at the point of sale so that there is no RFID transponder data to be read as the user takes products away from a store. However this can be time-consuming for store personnel.

Another approach makes use of RFID transponders that have a detachable portion which is broken off when the tagged products are bought, preventing subsequent communication with the transponders. Yet another approach exploits a capability built into RFID transponders that conform to the EPC-Global Class 1 Generation 2 tag standard (the ISO 18000, Part 6C standard). These EPC Global C1 G2 transponders are designed to respond to a PIN-protected "kill" command, which makes the transponder data unreadable. Point-of-sale apparatus may be designed to transmit the appropriate PIN codes to the RFID transponders that tag products being bought by a user, so that these transponders become unreadable. This "solution" involves a considerable overhead in terms of data processing and storage because each RFID transponder has its own PIN and the point of sale apparatus must be able to access, securely, the "kill" passwords of all the RFID transponders applied to products sold in the store.

Moreover, the techniques described in the preceding paragraph have the disadvantage that they render the RFID transponder data permanently unavailable. It may be the case that the user has at home one or more so-called "smart devices" equipped with an RFID reader and able to interact with RFID transponders in order to obtain data automatically about tagged items the user brings home. Thus, for example, the user may have a smart domestic appliance (e.g. a refrigerator, a washing machine, etc.) which can interrogate RFID transponders of items the user brings home, for example for the purposes of automatically establishing an inventory, for automatically determining product care requirements (wash temperature, use-by date), and so on. The user's smart devices cannot exploit the information available from RFID transponder data if the confidentiality of the data has been "protected" by a technique which makes the data unreadable as from the time of purchase or acquisition of the item tagged by the transponder.

In a similar way, there will usually be an ongoing need to be able to read, and even update, RFID transponder data in devices that are implanted in living things. This may be the case, for example, when the RFID transponder is a source of information such as medical history (e.g. including details of allergies, medication, etc.) or links to a social media account relating to the tagged person or animal. In cases of this kind, clearly it would be undesirable to "protect" the confidentiality of data by rendering it permanently unreadable.

It has been proposed by Konidala et al in "Security Framework for RFID-based Applications in Smart Home Environment" (Journal of Information Processing Systems, Vol.7, No.1, March 2011) to protect the privacy of RFID transponder data relating to bought products by rendering the RFID transponder unavailable simply for the time the tagged object is in transit between a point of sale and the user's smart home. This temporary securing of the RFID transponder data is achieved by exploiting a "sleep" function built in to EPC Global C1 G2 UHF transponders. These RFID transponders may be "put to sleep" (locked) by transmitting an appropriate access password to the transponder. Data cannot then be read out from the transponder's memory banks until the transponder has been sent a corresponding access code to "wake-up"/unlock it. Konidala et al have proposed to design a point-of-sale apparatus to look up the access passwords that correspond to the EPCs of RFID transponders attached to products being sold. The point-of-sale apparatus then transmits the appropriate access passwords to the RFID transponders so as to put them to sleep. Also, the point-of-sale apparatus transmits to the user's smartphone the pairs of EPCs and access passwords applicable to the products the user has bought. At the user's home the user can "wake up" the RFID transponders by transmitting to them the access codes stored in the user's smartphone.

Although the proposal described in the preceding paragraph protects the privacy of RFID transponder data in a manner which still makes the data available to the user's smart home devices, it requires the user to log an EPC and corresponding access password in his smartphone for every RFID-tagged product that he buys, and to activate an application on his smartphone to "wake-up" the RFID transponders when he gets home. This need for user intervention makes the procedure more cumbersome. Moreover, the procedure is not available if the user forgets his smartphone or the phone battery is out of charge. Furthermore, this technique can only be applied to RFID transponders which have a password-protected sleep function. In addition, the RFID transponder data can be freely read after the transponder has been "woken" by the user, which can compromise the user's privacy, especially if he throws the RFID-tagged object away in his domestic refuse.

The present invention has been made in view of the above-mentioned disadvantages.

Certain embodiments of the invention provide a method of securing RFID transponder data of an RFID transponder being bought (or otherwise acquired) by a user, or of an RFID transponder whose data the user wishes to update. The RFID transponder may be one that is applied in tagging an object, an animal or another living thing (including a human being, such as the user himself). The method comprises:
determining the public key of a cryptographic public-private key-pair of a user who designates an RFID transponder to be acquired or updated,
encrypting RFID transponder data using the user's public key determined in the determining step, and
writing the encrypted RFID transponder data into a memory of the RFID transponder.

In various embodiments of the invention this method of protecting RFID data confidentiality is applied when a user acquires an RFID transponder, for example at the point of sale (or, more generally, point of issue) of an RFID-tagged object to the user, or at the time when an RFID transponder is first implanted into an animal belonging to the user or into the user's body.

Thus, for example, the method may be applied in a store so that the privacy of the RFID transponder data is protected while the user takes the acquired object home. In another application, where the user is acquiring an object remotely (for example, by an online transaction), the data-securing method may be applied at the site where the object is located, before the object is despatched to the user, so that the privacy of the RFID transponder data is protected while the object is in transit to the user.

In yet another application, this method of protecting RFID data confidentiality may be applied when data in an RFID transponder is being updated, for example, when a medical history associated with a living thing tagged by the transponder is being updated in the office of a doctor or veterinarian. In this way private data of the tagged living thing may be kept confidential but is still available for reading by authorized devices.

In the above-mentioned method the encryption of the RFID transponder data is performed according to an asymmetric encryption algorithm, i.e. using public-private key cryptography. The encryption uses a public key of the user who is acquiring the RFID transponder or responsible for an RFID transponder that is being updated. Thus, the confidentiality of the RFID transponder data is protected in a manner which does not destroy the information embodied in the data; it merely hides that information from clandestine RFID readers which might otherwise have been able to read the data after the user the acquisition or update of the RFID transponder. Thus, the user may bring an acquired/updated RFID transponder to another location, for example to his home, where there is a smart device equipped with an RFID reader and, provided that the smart device has access to the user's private key, the smart device can read, decrypt and use the RFID transponder data. So, for instance, the user may buy an RFID-tagged product in a store, and the data in the transponder will remain confidential while the user brings the product back to his home (office, etc.) where it may be read by smart domestic appliances that have access to the user's private key.

The above-mentioned method may be applied to substantially any kind of RFID transponders into which data can be written; there is no need for the transponder to have a "sleep" function. The above-mentioned method does not require explicit intervention from the user on each occasion when he brings RFID transponders he has acquired/updated into range of the smart devices at his home (or at his office, in his car, or at another user location). As long as the user's private key is, or has been made, available to the user's smart devices, those devices can automatically decrypt and retrieve the RFID transponder data.

In certain embodiments of the invention the data to be written in the RFID transponder is encrypted externally of the transponder, for example in an RFID reader device that has data to write/re-write in the transponder and has access to the user's public key. These embodiments have the advantage that they may be applied to protect confidentiality of data in passive RFID transponders and, more generally, in RFID transponders that do not themselves have the capability to perform cryptographic operations. Such transponders tend to be cheaper than those which do have cryptographic capabilities, and are in widespread use. Of course, off-transponder encryption may be used even to protect data read from RFID transponders that do have cryptographic capabilities.

In certain embodiments of the invention the data is to be written in an RFID transponder that has the capability to perform certain cryptographic operations, and the encryption using the user's public key is performed by the RFID transponder itself. In such embodiments the RFID transponder may receive input of the user's public key in various ways including, for example, being notified of the user's public key by a point-of-sale apparatus which performs communication with the transponder.

In typical applications of the RFID transponder-data securing methods according to the invention, RFID transponders may be acquired/updated by various different people and so it is necessary for a determination to be made as to which is the appropriate public key to use for encrypting the RFID transponder data in a given case. In certain embodiments of the invention the RFID transponder-data securing method is applied by a point-of-sale apparatus at a time when a user presents an object that he intends to buy. The point-of-sale apparatus may determine the user's public key in a variety of ways. For example, the user may manually input the relevant public key by operating a data-input device.

As another example, a point-of-sale apparatus may be configured to determine the relevant user public key by reading a card or other token/recording medium presented by the user. In certain embodiments of the invention the point-of-sale apparatus may be configured to determine the relevant public key by reading a payment card, loyalty card or the like which the user habitually presents as part of the process of acquiring the object, thus avoiding the need for a specific private-key-input step additional to the processes normally performed at the time of sale of an object.

As a yet further example, a point-of-sale apparatus may be configured to determine the relevant public key by communicating with a user terminal, for example by performing wireless communication with an application on a mobile phone carried by the user. This approach avoids the need for the user to provide public-key data manually.

In another example, a point-of-sale apparatus may be configured to determine the relevant public key by performing a database look-up operation, for example in a database of a store where the point of sale apparatus is located, in a database maintained on a remote server, and so on. Typically the database look-up involves querying the database based on user identification data that identifies the user seeking to acquire the RFID-tagged object, but other approaches may be employed.

In still another example, the point-of-sale apparatus may be configured to determine the relevant public key during a near-field-communication (NFC) process engaged in with a user mobile terminal in order to perform a transaction to acquire the RFID-tagged object. In cases where the user would already use his mobile terminal to perform NFC communications with a point-of-sale apparatus in order to pay for an object he is acquiring then this approach enables the public-key data to be transferred to the point-of-sale apparatus without explicit action on the user's part, saving him time and effort.

The public-key applicable for encryption of RFID transponder data in a given case may be supplied directly (e.g. as key-data that is read from a card, received from a user terminal, and so on) or it may be supplied indirectly, for example by providing a URL or, more generally, a reference to a location where the public key data is available. In embodiments of the invention where the public-key data is supplied indirectly this simplifies the process of setting a new public key, for example in a case where the user's old public-private key pair has become compromised, because the updating of the public key entails changing the information written at the reference location rather than issuing a new card..

In some cases RFID-tagged objects are supplied to a store in a condition where some or all of the RFID transponder data is already encrypted using the store's public key. In certain embodiments of the invention which handle RFID transponders in this condition, the RFID transponder data is first decrypted using the store's private key and then it is re-encrypted, this time using the acquirer's public key, before being written back into the transponder's memory.

The present invention further provides a computer program comprising instructions to implement any one of the above transponder-data-securing methods according to embodiments of the invention, when the program is executed by a processor.

The present invention still further provides a recording medium bearing the above-mentioned computer program.

The present invention yet further provides a point-of-sale apparatus comprising:
an RFID reader configured to read RFID transponder data of an RFID transponder tagging an item presented for purchase by a user,
a key procurement unit configured to determine the public key of a cryptographic public-private key pair of said user,
an encryption unit configured to encrypt the read RFID transponder data using the user's public key determined by the key procurement unit, and
a transmitter to transmit the encrypted RFID transponder data to said RFID transponder.

The above point-of-sale apparatus can protect the confidentiality of RFID transponder data of an RFID transponder tagging an item being bought by a user in a manner which protects the privacy of the data while the user is transporting the bought item to an environment, such as a smart home, where he has one or more devices that can exploit information embodied in RFID transponder data.

The above point-of-sale may have a key procurement unit that is configured to determine the user's public key by a process selected in the group consisting of: reading a user card, such as a payment card or a loyalty card, receiving data by communication with a user terminal, and retrieving data from a database.

The above-described method of securing RFID-transponder-data may be performed as part of a method of supplying RFID transponder-data securely to a user-authorised smart device, in which:
the RFID transponder, having in memory the encrypted RFID transponder data, is brought into range of an RFID reader of the user-authorised smart device,
the RFID reader of the user-authorised smart device reads the encrypted RFID transponder data in memory of said RFID transponder, and
the encrypted RFID transponder data is decrypted using the private key of the cryptographic public-private key-pair assigned to the user.

The foregoing method of supplying RFID-transponder-data to a user-authorised smart device applies a user's public key to encrypt RFID transponder data at the point of acquisition of the RFID-tagged item by the user and decrypts the encrypted data at the smart device by applying the user's corresponding private key, thereby ensuring the privacy of the data, while the tagged item is in transit between the point of acquisition and the smart device, in a manner that keeps the data available for exploitation by the smart device.

The user-authorised smart device may have its own storage module holding the user's private key. The security of the system is improved when the user's private key is stored in a secure element (e.g. a secure memory, a smart card, a secure chip, etc.). In certain embodiments, the user-authorised smart device is connected in a user home network and is configured to retrieve the user's private key from another device connected in the user home network, for example from another device that is, or has, a secure element. This makes it possible to provide secure storage of the user's private key in the home network without needing to provide a secure element in every device on the home network that performs cryptographic operations using the user's private key. In certain embodiments, the user-authorised smart device can connect, e.g. via a network, to an external device that provides the user's private key and this external device can be outside the user's home network (e.g. it may be a server of a certification authority). In yet other embodiments the user-authorised smart device may read the user's public key from a recording medium (e.g. a flash drive readable by USB, a memory card, a disc, etc.), or receive the key by manual input.

The expressions "smart device" and "smart home" are used here to designate, respectively: a device having the ability to exchange data automatically with other devices and objects, and premises equipped with one or more smart devices (especially premises in which smart devices are networked with one another). Thus, a "smart home" may designate premises that are not someone's domicile (e.g. it may be an office).

Certain embodiments of the present invention provide domestic appliances (e.g. washing machines, refrigerators, freezers, dish-washers, microwave and other ovens, smart bookcases and other smart storage, and so on) that comprise: an RFID reader configured, when an object bearing an RFID transponder comes into range of the RFID reader, to read RFID transponder data in memory of said RFID transponder, a key supply unit configured to supply a private key of a cryptographic public-private key-pair of a user of said domestic appliance, and a decryption unit configured to decrypt the read data using the private key supplied by the key supply unit. The appliance can then exploit the information that it obtains about the tagged item from the transponder data.

In cases where the domestic appliance is connected in a home network, the key supply unit may be configured to obtain the user's private key by communication with another device, external to itself, that is also connected to the home network. More generally, the domestic appliance may be configured to obtain the user's public key via communication with an external device, e.g. via a network.

Certain embodiments of the invention provide a home network comprising:
a storage module storing a private key of a cryptographic public-private key pair of a registered user of the home network, and
at least one device capable of accessing the storage module, said device comprising:
   an RFID reader configured, when an object bearing an RFID transponder comes into range of the RFID reader, to read RFID transponder data in memory of said RFID transponder, and
   a decryption unit configured to decrypt the read data using the private key stored in said storage module.

Further features and advantages of embodiments of the present invention will become apparent from the following description of said embodiments, which is given by way of illustration and not limitation, illustrated by the accompanying drawings, in which:
Fig.1 is a flow diagram illustrating steps in an example of a method according to the invention to secure RFID transponder data of an RFID transponder applied to an object being acquired by a user;
Fig.2 is a diagram illustrating schematically a point-of-sale apparatus that may apply the method illustrated in Fig.1, and its operating environment;
Figs.3 is a block diagram illustrating functional components of an example of the point-of-sale apparatus illustrated in Fig.2;
Fig.4 is a communications diagram illustrating steps in one example of a method to supply RFID transponder data securely to a user smart device;
Fig.5 is a block diagram illustrating an example of a domestic appliance according to an embodiment of the invention; and
Fig.6 is a diagram illustrating an example of a home network according to an embodiment of the invention.

Certain embodiments of the invention will now be described for the purposes of illustration, not limitation. The embodiments are described in a context where the RFID transponders whose data's confidentiality is to be protected are affixed to (or otherwise associated with) products being purchased by a customer in a store. However, it is to be understood that the invention may be applied more generally in other contexts where RFID transponders are used to tag items (including living things) and it is desired to protect the confidentiality of the transponder data between a point of acquisition/update of the RFID transponder designated by a user and the presentation of the RFID transponder to a user-authorized smart device. Furthermore, the user may be remote from a point of acquisition of an RFID-tagged object, for example the user may be purchasing an RFID-tagged item online.

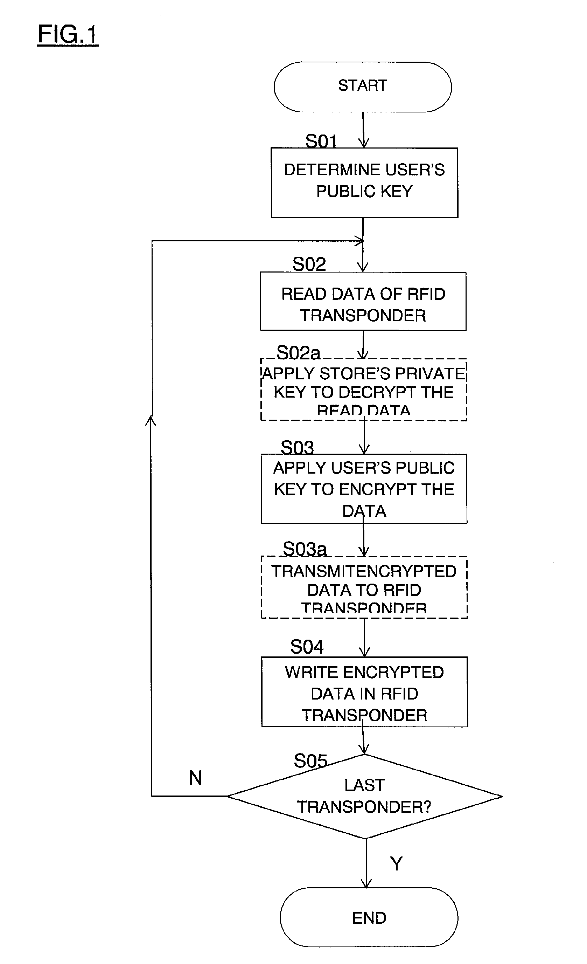

General features of an embodiment of a method according to the invention, for securing RFID transponder data of an RFID transponder applied to an object being purchased by a user in a store, will now be described with reference to the flow diagram of Fig.1.

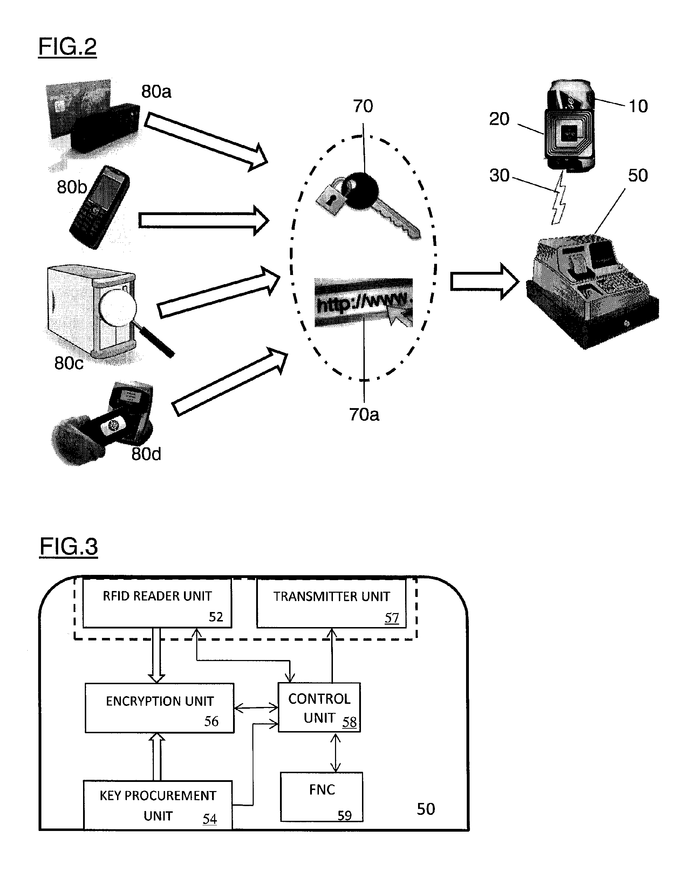

In the example of Fig.1, the method starts when a user brings an item (or several items) to a point of sale in a store (shop). By bringing the RFID-tagged item(s) to the point-of-sale the user has, de facto, designated the RFID transponder(s) tagging this item (these items) as the RFID transponder(s) to which the method according to the invention is to be applied. In a first step S01 of the method, the appropriate public key of an asymmetric cryptographic key pair (public-private key pair) of this user is determined. The user's public key may be determined in any convenient manner, for example by the techniques described below with reference to Fig.2.

The method continues with a step S02 of reading data of an RFID transponder tagging an item the user has brought to the point of sale for purchase. In some cases the RFID transponder data is present in the transponder's memory in encrypted form, encrypted by a public key of an asymmetric cryptographic key pair of the store. In that case a step S02a (indicated using dashed lines in Fig.1) may be performed to decrypt the read data, using the store's public key. In certain embodiments of the invention it may be the case that only a part of the data is encrypted, with another part available in cleartext: for example, basic information about the product may be provided in unencrypted form. In such a case a customer equipped with a device such as a smartphone with an RFID reader can use his personal device to obtain the basic device information but the encrypted data can only be retrieved using the store's private key. For example, an RFID may hold a URL in the general form www.product.com/produclT?jasvkjfgle3430r9ouof, and the part after the question mark ? may be an encrypted part that only the store can decrypt using its private key.

Then, in step S03, the RFID transponder data is encrypted using the user's public key determined in step S01. Depending on the implementation, the encryption of the RFID transponder data in step S03 may be performed within the RFID transponder itself (e.g. in a case where it has cryptographic capabilities). Alternatively, the encryption may be performed off-transponder, in which case the encrypted data is then transmitted to the RFID transponder as illustrated by step S03a indicated using dashed lines in Fig.1. The RFID data encrypted using the customer's public key is written in the RFID transponder in step S04 of the method.

In certain embodiments of the invention a selection may be made as to which information is to be encrypted using the user's public key. That is, it may be the case that some of the data is newly written, written back or maintained in the RFID transponder in unencrypted form, while other data, encrypted by the user's public key, is stored in the RFID transponder. Depending on the application, different selections may be made of the data to be encrypted using the user's public key. The selection may be predetermined or it may be adjustable in a dynamic manner (e.g. based on a choice made by the user and/or made by the store).

If the customer is only purchasing one RFID-tagged item then it is appropriate to end the method after step S04. However, in a case where the customer has brought several RFID-tagged items to the point of sale, for purchase, it may be appropriate to determine whether or not the transponder data that has been processed in steps S02 to S04 relates to the last one of the RFID transponders (step S05 of Fig.1). If the data of the last RFID transponder has been processed then the method ends. Alternatively, if among the items the user has brought to the point of sale there is another RFID transponder whose data has not yet been processed then the flow returns to step S02 and data of an as-yet-unprocessed RFID transponder is processed. This procedure continues until the RFID transponder data of all the items the customer is purchasing has been encrypted by the user's public key.

The order of steps S01 and S02 can be changed in the method illustrated by Fig.1, so that RFID transponder data is read before the relevant user public key is determined. In either case it is advantageous to maintain the user's public key available (e.g. cached in memory) until all of the RFID transponders tagging the user's purchases have been processed. This avoids the need to repeatedly acquire the user public key information during the user's purchase transaction.

The present invention extends to the case where the user wishes to protect the confidentiality of data in only some of the RFID transponders he is acquiring/updating. In such a case steps S02 to S04 of the method of Fig.1 are applied only in relation to the selected RFID transponders.

The user may have more than one public-private key pair, in which case any desired method may be used to select which of the key-pairs should have its public key used on a given occasion. For example, the choice may be made by the user or it may be made automatically based on a predetermined criterion (e.g. a certain key pair may be assigned for use in transactions of a particular nature and/or involving a particular store). The RFID transponder may store an indication of which of the user's key-pairs has had its public key used for the encryption of the RFID transponder data. In some cases, e.g. where the number of key-pairs is small, there may be no stored indication of which key-pair was used (and a smart device reading the encrypted data at the user's home may make attempts to decrypt the data by applying the user's different private keys until decryption is successful).

The user's public key may be a key that is shared between this user and one or more other people (e.g. the user may be employing a public key that was issued to another member of his household).

In the encryption step S03, the user's public key may be used to encrypt the identifier code (e.g. an EPC or the like) that is stored in the RFID transponder and uniquely identifies the tagged item. Bearing in mind that the identifier code may itself convey certain information regarding the nature/properties of the tagged item, and/or may allow such information to be freely obtained via a look-up service, encryption of the identifier code may be effective to conceal the nature and identity of the tagged item from third parties who attempt to read the RFID transponder clandestinely after the item has been acquired by the user. Depending on the technical specification of the transponder there may be data, other than an EPC, which is descriptive of the item tagged by the transponder. It may be desired to encrypt some or all of such descriptive data.

The invention is not particularly limited having regard to the encryption algorithm that is employed to encrypt the transponder data using the user's public key and decrypt the data using the user's private key. Conventional asymmetric encryption algorithms may be used. The encryption may be made more (or less) secure by increasing (or decreasing) the number of bits of the selected encryption algorithm.

Fig.2 illustrates a point-of-sale apparatus 50 that is configured to communicate with an RFID transponder 20 applied to a product 10 and to perform a method according to Fig.1 above so as to protect the confidentiality of the data recorded in the RFID transponder 20 after the product 10 has been sold to a customer. The point-of-sale apparatus 50 may be configured to determine the user's public key 70 by any convenient technique including, for example, one or more techniques selected in the group consisting of: performing a card reading operation 80a, performing a communication process with a user terminal 80b (illustrated here as a mobile phone), and executing a query to a database, 80c. In a case where the customer completes his purchase of the product 10 by performing a near-field communications process (e.g. an NFC payment process 80d) the user's public key may form part of the data set that is transferred to the point-of-sale apparatus 50 during the transaction.

The above-mentioned card-reading operation 80a may involve reading the user's public key from a payment card that the customer uses to pay for purchase of the product 10. In a similar way, the card-reading operation 80a may involve reading the user's public key from a loyalty card issued to the user by the store housing the point-of-sale apparatus 50 and which the user presents when he makes purchases in the store. Alternatively, the card reading operation 80a may be an operation that is performed solely to acquire the user's public key.

The above-mentioned communication process 80b with a user terminal may involve communication between the point-of-sale apparatus 50 and the user's mobile phone or another mobile terminal that the user carries with him. Typically the communication process 80b takes place by wireless communication but wired communications may be used.

The above-mentioned execution 80c of a database query may use an identifier of the user or a code assigned to the user to query a local or remote database to retrieve the user's public key.

Security is enhanced by programming or arranging the point-of-sale apparatus 50 so that it deletes the user's private key from its memory after it has finished encrypting the data of the RFID transponders tagging all the products the user is purchasing.

The step of determining the user's public key may involve first obtaining a URL or other reference 70a that identifies a location from which the user's pubic key can be obtained, and then obtaining the user's public key from the referenced location.

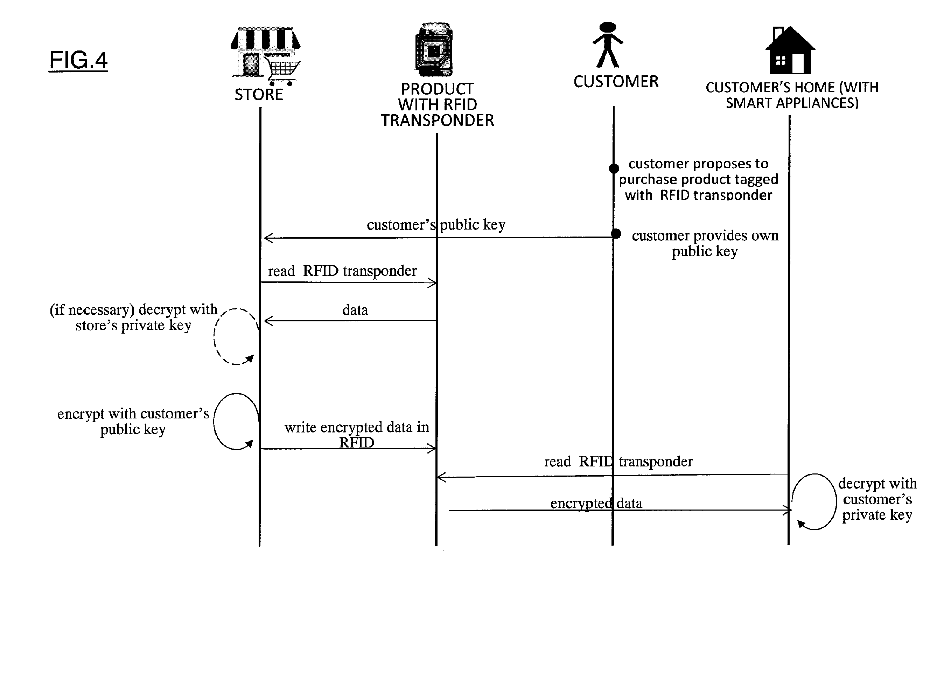

Fig.3 illustrates functional units in an example of the point-of-sale apparatus 50 illustrated in Fig.2. In the example of Fig.3, the point-of-sale apparatus comprises an RFID reader unit 52 configured to read RFID transponders that tag items presented for purchase, a key procurement unit 54 that determines the user public key to be used for encrypting the RFID transponder data, an encryption unit 56 for performing the encryption, a transmitter unit 57 for transmitting the encrypted data to the RFID transponder, a control unit 58 (e.g. a processor) to control the other units in the point-of-sale apparatus 50, and various other functional units (designated generally by reference numeral 59) to perform other standard functions of a point-of-sale apparatus (e.g. generating print data for a receipt, calculating reward points according to a loyalty scheme, and so on). The RFID reader unit 52 and the transmitter unit 57 may be integrated into a single device as indicated by the dashed lines in Fig.4.

The key procurement unit 54 may take different forms depending on the process used for determining the user's public key. For example, in the case where the user's public key is determined by performing a card reading operation (e.g. operation 80a in Fig.2), the key procurement unit 54 may include a card reader and/or communicate with an external card reader. As another example, in the case where the user's public key is determined by performing a communication process with a user terminal and/or an NFC process (e.g. process 80b or 80d in Fig.2), the key procurement unit 54 may include an appropriate communications interface. As still another example, in the case where the user's public key is determined by executing a query to a database (e.g. process 80c in Fig.2), the key procurement unit 54 may include the database and appropriate query software, or the database may be external.

Fig.4 illustrates an embodiment of a method for securely providing RFID transponder data to a user's smart device, e.g. a smart appliance in the user's home. This method may include steps corresponding to those illustrated in Fig.2 to generate and record encrypted data in the RFID transponder tagging a product acquired by the user.

In the example illustrated in Fig.4, the user (here designated "customer") decides to purchase a product tagged with an RFID transponder. The customer provides his own public key to a point-of-sale apparatus in the store where he is making his purchase. The store apparatus then interrogates the RFID transponder of the product being purchased, so as to read its data (e.g. its identifier code). The RFID transponder supplies its data to the store apparatus (which decrypts the data, if necessary, using its own private key). The store apparatus then encrypts the RFID transponder data using the customer's public key and transmits the encrypted data to the transponder for writing in a memory thereof. When the user brings the tagged product he has purchased back to his home (or, more generally, to a location where the transponder is within the read range of a user device/appliance equipped with an RFID reader device), the user device reads the encrypted data from the RFID transponder and applies the customer's private key to decrypt the data. The home appliance may then exploit the read data in the usual way. For example, if the appliance is a refrigerator it may record the purchased product along with its expiration date with a view to being able to offer services to the user: for example, proposing recipes to the user based on the ingredients in the refrigerator, generating shopping lists as products run out or reach their expiration date, etc.

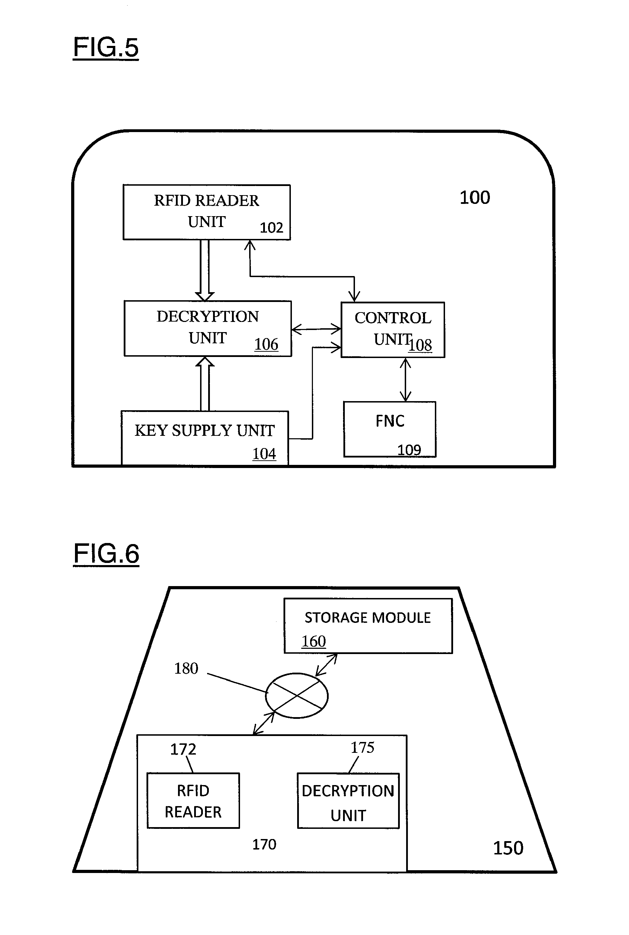

Fig.5 illustrates functional units in an example of a domestic appliance 100 according to an embodiment of the invention.

In the example of Fig.5, the domestic appliance 100 comprises: an RFID reader unit 102 to read RFID transponder data in memory of an RFID transponder when an object bearing the RFID transponder comes into range of the RFID reader, a key supply unit 104 to supply a private key of a cryptographic public-private key-pair of a user of said domestic appliance (e.g. a registered user), and a decryption unit 106 configured to decrypt the read data using the private key supplied by the key supply unit 104. The operation of the functional units of the domestic appliance 100 is controlled by a control unit 108 (e.g. a processor), which also controls various functional units (indicated generally by reference numeral 109 in Fig.5) which exploit the read RFID data descriptive of the acquired object tagged by the RFID transponder. (Incidentally, the control unit 108 or a functional unit 109 may make use of an object look-up service to look up information relating to the tagged object, based on the decrypted transponder data).

The key supply unit of the domestic appliance 100 may take different forms depending on the manner in which the user's private key is made available. For example, the user's private key may be stored in the domestic appliance 100 in which case the key supply unit 104 may be a memory/storage unit or secure element storing the key. In another example, the key supply unit 104 is configured to obtain the user's private key by communication with an external device via a user home network (e.g. a wired or wireless home network). In some embodiments of the invention the user's public key may be stored on a server, e.g. a server belonging to a certification authority, and smart home appliances may communicate with this server (directly or via a hub) to obtain the key. Optionally they can store the private key temporarily, e.g. avoiding communication with the certification authority every time.

Fig.6 illustrates functional units of an example of a home network 150 according to an embodiment of the invention.

In the example of Fig.6, the home network 150 comprises: a secure element 160 storing a private key of a cryptographic public-private key pair of a user of the home network (e.g. a registered user), and at least one device 170 capable of retrieving the private key, securely, from said secure element 160 via a wired or wireless connection 180. The device 170 comprises: an RFID reader 172 configured, when an object bearing an RFID transponder comes into range of the RFID reader, to read RFID transponder data in memory of said RFID transponder, and a decryption unit 175 configured to decrypt the read data using the private key retrieved from said storage module..

In practice, some or all of the illustrated functional units of the point-of sale apparatus and domestic appliance according to embodiments of the present invention are likely to be implemented in the form of software (computer programs, executable instructions) implemented using one or more processors. It should be mentioned that, in practice, there may not be a one-to-one relationship between the individual functional units described above and corresponding component blocks of the software. In other words, in cases where the figures represent a single module performing a particular function, in practice two or more cooperating modules may be used to implement the corresponding function. In a similar way, in cases where the drawings show two or more separate modules which cooperate to perform various functions, in practice the relevant functions may be implemented using a different number of modules and the distribution of functions between those modules may differ from the detailed description in this document.

Although the present invention has been described above with reference to certain specific embodiments, it will be understood that the invention is not limited by the particularities of the specific embodiments. Numerous variations, modifications and developments may be made in the specified embodiments within the scope of the appended claims.

For instance, although the above description of specific embodiments is given in the context of a user purchasing RFID-tagged objects in a store, and includes example techniques by which user public key data may be obtained by a point-of-sale apparatus of a store, the user public key data may be obtained by alternative or additional techniques (especially in the case where an RFID-tagged item is acquired by an online transaction). For example, the public key may form part of the user's account details logged with the seller/provider; during a payment step in the transaction, the public key may be determined via its association with a payment card being used to effect payment (e.g. by contacting the card issuer), or the user may be invited to link to a service that stores "his/her" public keys, e.g. this may be a certification authority, or an entity that may provide this facility as a service. As another example, the user may use credentials from a service such as Facebook to login in to third-party services, and the relevant service may provide the public key data.

In a similar way, although the detailed description given above relates to the case of RFID transponders that tag objects, and to the acquisition of the tagged objects in a store, embodiments of the invention may be applied in relation to encrypting data in RFID transponders that are implanted in animals or human beings. It is to be understood that the techniques described above in relation to RFID transponders that tag objects may be applied, with appropriate adaptations, to the case of implanted RFID transponders being acquired or updated by a user.

In certain embodiments where the protection of the RFID transponder data is initiated at a time when a user acquires an item on a temporary basis (e.g. he borrows a library book, rents a DVD, bicycle, car, etc.), the user public key may be read from a borrower card associated with the service providing the item.

## Claims

1. A method of securing RFID transponder data of an RFID transponder designated, by a user, for acquisition or update, the method comprising the steps of:
determining the public key of a cryptographic public-private key-pair of a user who designates an RFID transponder to be acquired or updated,
encrypting RFID transponder data using the public key determined in the determining step, and
writing the encrypted RFID transponder data in a memory of said RFID transponder.

2. The RFID transponder data securing method according to claim 1, wherein the encrypting step is performed externally of the RFID transponder and there is provided the step of transmitting the encrypted RFID transponder data to the RFID transponder.

3. The RFID transponder data securing method according to claim 1, wherein the encrypting step is performed internally of the RFID transponder.

4. The RFID transponder data securing method according to claim 1, 2 or 3, performed by a point-of-sale apparatus, wherein the determining step comprises obtaining said public key via the point-of-sale apparatus performing a process selected in the group consisting of: reading a user card, such as a payment card or a loyalty card, receiving data by communication with a user terminal, and retrieving data from a local or remote server or database.

5. The RFID transponder data securing method according to claim 4, and comprising performing a near-field communication process between the point-of-sale apparatus and a user mobile terminal to execute a transaction for acquisition of said RFID transponder by the user, wherein as part of the near-field communication process the point-of-sale apparatus obtains said public key or a reference to a location where said public key is available.

6. The RFID transponder data securing method according to any one of claims 1 to 4, wherein the determining step comprises obtaining a reference to a location where said public key is available and retrieving the public key from the location indicated by said reference.

7. The RFID transponder data securing method according to any previous claim, performed by a point-of-sale apparatus of a store, wherein the reading step comprises:
reading, from the RFID transponder, RFID transponder data encrypted by a public key of a cryptographic public-private key-pair of the store, and
decrypting the encrypted RFID transponder data read in the reading step, using the private key of said cryptographic public-private key-pair of the store.

8. A computer program comprising instructions to implement the method of any one of claims 1 to 7 when the program is executed by a processor.

9. A recording medium bearing a computer program according to claim 8.

10. A point-of-sale apparatus comprising:
an RFID reader unit configured to read RFID transponder data of an RFID transponder tagging an item presented for purchase by a user,
a key procurement unit configured to determine the public key of a cryptographic public-private key pair of said user,
an encryption unit configured to encrypt the read RFID transponder data using the user's public key determined by the key procurement unit, and
a transmitter unit to transmit the encrypted RFID transponder data to said RFID transponder.

11. A point-of-sale apparatus according to claim 10, wherein the key procurement unit is configured to determine the user's public key by a process selected in the group consisting of: reading a user card, such as a payment card or a loyalty card, receiving data by communication with a user terminal, and retrieving data from a database.

12. A method of supplying securely, to a user-authorised smart device, RFID transponder data of an RFID transponder designated by the user for acquisition or update, the data-supplying method comprising:
performing the RFID-transponder-data securing method according to any one of claims 1 to 7 at the point of acquisition/update of the RFID transponder designated by the user,
bringing the RFID transponder, having in memory the encrypted RFID transponder data, into range of an RFID reader of said user-authorised smart device,
reading, by the RFID reader of the user-authorised smart device, the encrypted RFID transponder data in memory of said RFID transponder, and
decrypting the encrypted RFID transponder data using the private key of said cryptographic public-private key-pair assigned to the user.

13. An RFID-transponder-data supply method according to claim 12 wherein the user-authorised smart device is connected to an external device via a network, and comprising the user smart device retrieving said private key from said external device via the network.

14. A domestic appliance comprising:
an RFID reader configured, when an object bearing an RFID transponder comes into range of the RFID reader, to read RFID transponder data in memory of said RFID transponder,
a key supply unit configured to supply a private key of a cryptographic public-private key-pair of a user of said domestic appliance, and
a decryption unit configured to decrypt the read data using the private key supplied by the key supply unit.

15. A domestic appliance according to claim 14, wherein the key supply unit is configured to obtain said private key by communication with an external device via a network.
